## Europäisches Patentamt

## European Patent Office

## Office européen des brevets

(19)

(11) Veröffentlichungsnummer: **0 140 003**
**B1**

(12) **EUROPÄISCHE PATENTSCHRIFT**

(45) Veröffentlichungstag der Patentschrift:
**30.03.88**

(21) Anmeldenummer: **84110200.7**

(22) Anmeldetag: **28.08.84**

(51) Int. Cl.⁴: **F 16 C  29/02,** F 16 C  32/06

(54) **Führungsvorrichtung.**

(30) Priorität: **04.10.83  DE 3336002**

(43) Veröffentlichungstag der Anmeldung:
**08.05.85 Patentblatt 85/19**

(45) Bekanntmachung des Hinweises auf die Patenterteilung:
**30.03.88 Patentblatt 88/13**

(84) Benannte Vertragsstaaten:
**AT CH DE FR GB IT LI NL SE**

(56) Entgegenhaltungen:
**DE - A - 2 346 693**
**DE - C - 1 258 671**
**FR - A - 2 207 845**
**GB - A - 994 530**
**US - A - 3 253 665**
**US - A - 3 376 764**

(73) Patentinhaber: **Dr. Johannes Heidenhain GmbH,**
**Nansenstrasse 17, D-8225 Traunreut (DE)**

(72) Erfinder: **Kober, Hans-Rudolf, Dipl.-Ing.,**
**Finkenstrasse 23, D-8261 Kirchweidach (DE)**

ACTORUM AG

## Beschreibung

Die Erfindung bezieht sich auf eine Führungsvorrichtung nach dem Oberbegriff des Anspruchs 1.

Es sind Führungsvorrichtungen mit Luftlagern bekannt. So ist in der DE-C-1 258 671 eine Führungsvorrichtung beschrieben, bei der die Luftlager der starren Führungsflächen durch Magnete vorgespannt werden, und bei der die Führungselemente und die geführten Elemente miteinander über Gaslager in Eingriff stehen.

Aus der DE-A-2 346 693 ist eine Maschinenführung bekannt, bei der eine Führungsfläche mit einem separat gefertigten Bauteil zur Versorgung des Luftlagers versehen ist, wobei dieses Bauteil gegen Längsverschiebungen gesichert ist.

Die DE-A-3 023 837 zeigt eine luftgelagerte Maschinenführung, deren Lagerung bessere Betriebseigenschaften, insbesondere höhere Belastbarkeit und bessere Stabilität aufweisen soll.

All diesen Vorschlägen ist gemeinsam, dass die Bewegungsrichtung der zu führenden Elemente – z.B. eines Maschinenschlittens – von vornherein festgelegt werden muss. Änderungen der Richtung oder des Arbeitsbereiches sind ausgeschlossen.

Diese Festlegung ist für Maschinen der beschriebenen Art sicher sinnvoll und ausreichend, sie ist jedoch bei Maschinen, wie sie beispielsweise für messtechnische Aufgaben benötigt werden, sehr oft hinderlich, da dadurch die Einsatzmöglichkeiten für Messmaschinen eingeschränkt werden.

Gerade auf dem Gebiet der dimensionellen Messtechnik ist jedoch ein hoher Aufwand an Fachwissen und Fertigungspräzision nötig, um geeignete Messmaschinen herstellen zu können. Die Anschaffung solcher Maschinen ist daher für den Anwender mit hohen Kosten verbunden.

Messmaschinen sollen daher möglichst vielseitig einsetzbar sein. Die bekannten Führungsvorrichtungen, die in diesen Bauformen bevorzugt bei Messmaschinen eingesetzt werden, stehen jedoch im Widerspruch zu der geforderten Vielseitigkeit, da sie – wie eingangs erwähnt – Bewegungsrichtungen und Messbereich stark einschränken. So finden im allgemeinen Bewegungen in unterschiedlichen Koordinatenrichtungen in unterschiedlichen Abständen zur Basis der Messebene statt, was der Messgenauigkeit schadet, bzw. durch Kompensationsrechnungen eliminiert werden muss.

Der Erfindung liegt die Aufgabe zugrunde, bei Führungsvorrichtungen die bekannten Nachteile zu vermeiden, und eine Führungsvorrichtung zu schaffen, die vielseitiger einsetzbar, hochgenau und kostengünstig herstellbar ist, sowie eine geringe Baugrösse aufweist.

Diese Aufgabe wird durch eine Führungsvorrichtung mit den Merkmalen des Anspruchs 1 gelöst.

Die besonderen Vorteile der erfindungsgemässen Führungsvorrichtung sind die Vielseitigkeit bezüglich des Verwendungszweckes, die robuste Bauweise, die niedrige Bauhöhe und die Beweglichkeit in jede Koordinatenrichtung einer Ebene. Die Vorrichtung ist frei von starren äusseren Führungselementen.

Mit Hilfe von Ausführungsbeispielen soll die Erfindung anhand der Zeichnungen noch näher erläutert werden.

Es zeigen:

Figur 1 eine Schnittdarstellung einer Führungsvorrichtung,

Figur 2 eine Draufsicht auf eine Führungsvorrichtung,

Figur 3 Schnittdarstellung einer weiteren Führungsvorrichtung und

Figur 4 Draufsicht auf die Führungsvorrichtung gemäss Figur 3.

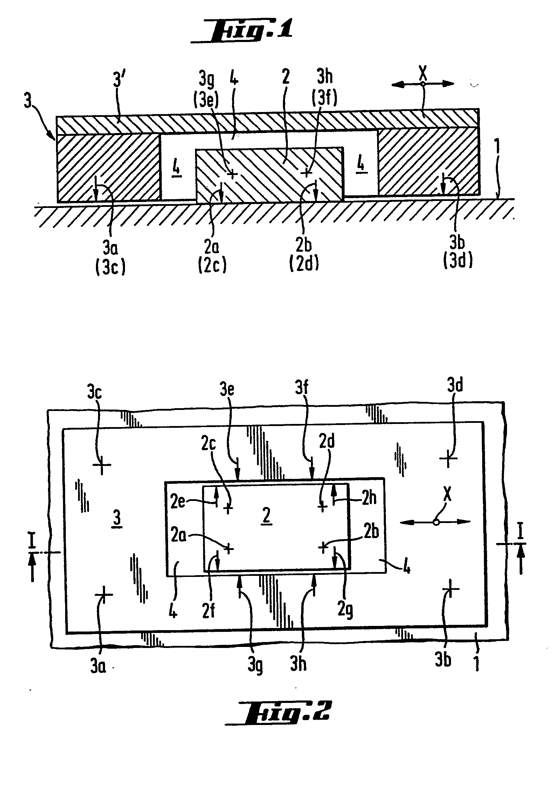

Die in Figur 1 gezeigte Führungsvorrichtung ist stark vereinfacht dargestellt, damit die Erfindung klar und gut verständlich erläutert werden kann.

Eine ebene Fläche eines nicht dargestellten Maschinenbettes bildet die Basis 1 einer Führungsvorrichtung, auf der sich Elemente 2 und 3 durch bekannte Luftlager 2a, 2b, 3a, 3b – die durch Pfeile symbolisiert sind – abstützen. Sind die Luftlager 2a, 2b, 3a, 3b in Betrieb, so können die Elemente 2 und 3 frei auf der ebenen Basis 1 verschoben und gedreht werden. Im Innern des Elementes 3 befindet sich eine zur Basis offene Aussparung 4, die das Element 2 aufnimmt, welches sich ebenfalls über Luftlager 2e, 2f, 2g, 2h in der Aussparung 4 des Elementes 3 abstützt. Anstelle der Luftlager 2e, 2f, 2g, 2h im Element 2 können natürlich auch im Element 3 Luftlager 3e, 3f, 3g, 3h vorgesehen werden, die das Element 2 abstützen. Die Anzahl und Dimensionierungen des Luftlagers richten sich nach den technischen Anforderungen.

Das Element 2 kann also aufgrund der sehr präzisen Luftlagerung in der Aussparung 4 in X-Richtung bewegt werden, nicht hingegen in einer anderen Richtung, wenn nicht das Element 3 selbst in einer anderen als X-Richtung bewegt wird. Innerhalb des Elementes 3 ist also das Element 2 sehr exakt in einer Richtung geführt. Bei jedem der Elemente 2 und 3 können die Luftlager 2a, 2b, 2c, 2d und/oder 3a, 3b, 3c, 3d getrennt abgeschaltet und sogar auf Unterdruck umgeschaltet werden. Das hat zur Folge, dass zu Beginn eines Arbeitsganges, beispielsweise einer Messung, die Luftlager 2a bis 3d in Betrieb sind. Am Ausgangspunkt für die Messung wird das Element 2 durch Abschalten bzw. Umschalten auf Unterdruck seiner Luftlager 2a bis 2d stillgesetzt und haftet fest auf der Basis 1. Das Messobjekt befindet sich auf dem Element 3 – das nun den Schlitten bildet – und ist entlang einer sehr präzisen Führung – die durch das Element 2 gebildet wird – verschiebbar, da die Luftlager des Schlittens 3 und die innerhalb der Aussparung 4 nicht abgeschaltet sind.

Durch Stillsetzen eines der Elemente 2 oder 3 werden also eine Führung und ein Schlitten gebildet. Wird gegenüber dem vorbeschriebenen das Element 3 auf der Basis 1 stillgesetzt, so lässt sich das Element 2 im Innern der Aussparung 4 präzise verschieben, und exakt in X-Richtung verlagern. Anschliessend kann das Element 2 wieder auf der Basis 1 stillgesetzt und das Element 3 weiter verschoben werden. Auf diese Weise kann schrittweise die Führung durch das Element 2 in X-Richtung verlängert werden. Der Messbereich wird also nur durch die Grösse der Basis 1 beschränkt.

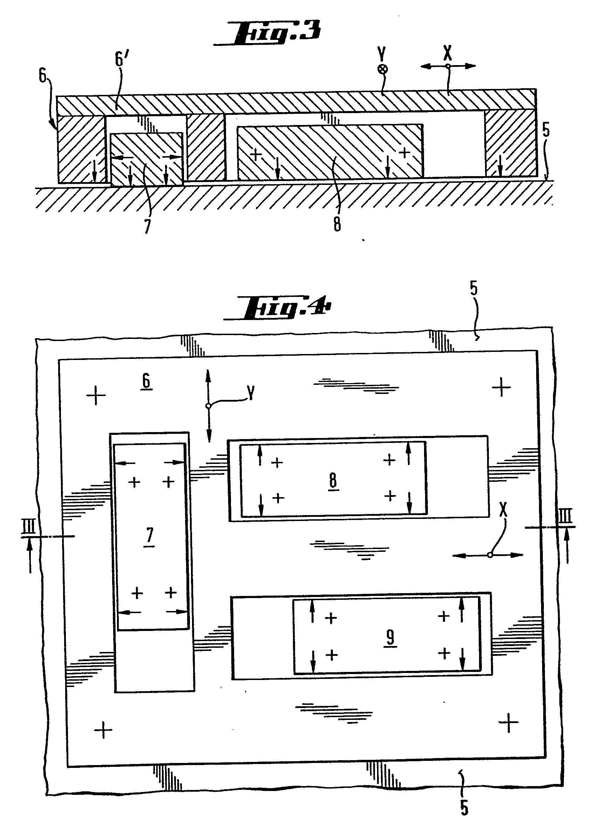

Zur Darstellung in Figur 2 ist der Deckel 3' des Elementes 3 abgenommen. Es sind dort weitere Luftlager durch Pfeile und Kreise symbolisiert. Im übrigen ist diese Zeichnung mit den Erläuterungen zu Figur 1 zu betrachten und verständlich.

Eine Ausführungsform für eine Führung in zwei senkrecht zueinander stehenden Bewegungsrichtungen ist schematisch in den Figuren 3 und 4 gezeigt. Auf einer ebenen Basis 5 sind Elemente 6, 7, 8, 9 angeordnet, von denen in der vorbeschriebenen Weise das Element 7 auf der Basis 5 stillgesetzt ist und damit die Führung bildet. Das nun als Schlitten wirksame Element 6 ist in Y-Richtung präzise verschiebbar und die ausser Führungsfunktion gesetzten Elemente 8 und 9 für die X-Richtung werden mit in Y-Richtung verschoben. Nach Erreichen der gewünschten Y-Position wird eines der Elemente 8 oder 9 oder beide abgesenkt und damit stillgesetzt. Nach Erzeugen eines Luftkissens unter dem bisherigen Führungselementes 7 wird dieses angehoben und kann mit dem Schlittenelement 6 in X-Richtung präzise verfahren werden.

Die beiden Elemente 8 und 9 werden vorgesehen, wenn eine schrittweise Bewegung des Schlittenelementes 6 in eine Richtung ohne jeweilige Absenkung des Schlittenelementes 6 erreicht werden soll. Die zwei Elemente 8 und 9 können – wie hier dargestellt – nebeneinander, aber auch hintereinander angeordnet sein. Selbstverständlich ist eine Mehrfach-Ausführung auch in der anderen Koordinatenrichtung möglich und ggf. sinnvoll.

Eine Kennzeichnung der Luftlager durch Bezugszeichen ist in den Figuren 3 und 4 unterblieben, da sie nicht zum besseren Verständnis beitragen könnte.

Die Relativbewegungen zwischen den Elementen 2, 3, 6, 7, 8, 9 können mittels bekannter Längenmesssysteme (fotoelektrisch, induktiv, magnetisch, interferometrisch, inkremental, absolut etc.) erfasst und durch bekannte Antriebe, z.B. Elektromotor, Pneumatikantrieb, Reibrad-, Spindel-, Zugmittelgetriebe gesteuert werden. Durch geeignete Auswertung der Messdaten ist es möglich, die zurückgelegten Wege je Schritt oder auf einen Ausgangspunkt bezogen zu ermitteln.

Die Stillsetzung der als Führung dienenden Elemente kann auch mit Hilfe von Elektromagneten erfolgen.

## Patentansprüche

1. Führungsvorrichtung mit Basis, Führungselementen, geführten Elementen und einer hydraulischen oder pneumatischen Lagerung mit Einrichtungen zum Feststellen oder Bewegen der beweglichen Elemente, bei der die Führungselemente (2, 7, 8, 9) mit den geführten Elementen (3, 6) über Flüssigkeits- oder Gaslager (2a bis 3h) in Eingriff stehen, dadurch gekennzeichnet, dass sowohl die Führungselemente (2, 7, 8, 9) als auch die geführten Elemente (3, 6) unmittelbar auf der gemeinsamen Basis (1, 5) in einer Ebene über Flüssigkeits- oder Gaslager (2a bis 3h) beweglich gelagert, jedoch wechselweise oder gleichzeitig feststellbar sind.

2. Führungsvorrichtung nach Anspruch 1, dadurch gekennzeichnet, dass für unterschiedliche Bewegungsrichtungen Führungselemente (2, 7, 8, 9) vorhanden sind.

3. Führungsvorrichtung nach Anspruch 1, dadurch gekennzeichnet, dass für jede Bewegungsrichtung mehrere Führungselemente (8, 9) vorgesehen sind.

## Claims

1. Guide device with base, guide elements, guided elements and a hydraulic or pneumatic mounting with devices for fixing or moving the movable elements, in which the guide elements (2, 7, 8, 9) are in engagement with the guided elements (3, 6) by way of fluid or gas bearings (2a to 3h), characterised in that both the guide elements (2, 7, 8, 9) and also the guided elements (3, 6) are movably mounted directly on the common base (1, 5) in one plane by way of fluid or gas bearings (2a to 3h) being however alternately or simultaneously fixable.

2. Guide device according to claim 1, characterised in that guide elements (2, 7, 8, 9) are provided for different directions of movement.

3. Guide device according to claim 1, characterised in that a plurality of guide elements (8, 9) are provided for each direction of movement.

## Revendications

1. Dispositif de guidage avec base, élément de guidage, élément guidés et un montage hydraulique ou pneumatique comportant des dispositifs pour l'arrêt ou le déplacement des éléments mobiles, dans lequel les éléments de guidage (2, 7, 8, 9) sont en prise avec les éléments guidés (3, 6) par l'intermédiaire de paliers hydrauliques ou pneumatiques (2a à 3h), caractérisé par le fait qu'aussi bien les éléments de guidage (2, 7, 8, 9) que les éléments guidés (3, 6) sont montés mobiles dans un plan au moyen de paliers hydrauliques ou pneumatiques (2a à 3h) directement sur la base commune (1, 5) mais peuvent être arrêtés alternativement ou en même temps.

2. Dispositif de guidage selon la revendication 1, caractérisé par le fait qu'il comporte des éléments de guidage (2, 7, 8, 9) pour différents sens de déplacement.

3. Dispositif de guidage selon la revendication 1, caractérisé par le fait que plusieurs éléments de guidage (8, 9) sont prévus pour chaque sens de déplacement.

## _Fig.1_

## _Fig.2_

## _Fig.3_

## _Fig.4_